# EUROPEAN PATENT APPLICATION

(11) **EP 2 166 737 A1**
(43) Date of publication of application: **24.03.2010**
(21) Application number: 09169579.1
(22) Date of filing: 07.09.2009
(51) Int. Cl.: H04M 1/60

(54) **Portable device including earphone circuit and operation method using the same**

(30) Priority: 23.09.2008 KR 20080093257
(71) Applicant: SAMSUNG ELECTRONICS CO., LTD., Suwon-si, Gyeonggi-do (KR)
(72) Inventor: Min, Sun Hwan, Gyeonggi-do (KR); Yoon, Yeo Moon, Gyeonggi-do (KR)
(74) Representative: Boakes, Jason Carrington

(57) **Abstract**

A portable communications device includes an interlace unit to which a three-pole earphone or a four-pole earphone is connected. The device also includes a controller that activates a microphone function prepared in a terminal body when the three-pole earphone is connected. When the four-pole earphone is connected, the controller deactivates the microphone function of terminal body. The device also includes an audio processing unit that is configured to output an audio signal to the three-pole earphone or the four-pole earphone under a control of the controller.

## Description

### TECHNICAL FIELD OF THE INVENTION

The present invention relates to a portable terminal having an earphone circuit, and more particularly, to a portable terminal having an earphone circuit that is capable of controlling a function of a portable terminal and a function of an earphone according to characteristics of each earphone after classifying the connection of a three-pole earphone and a four-pole earphone.

### BACKGROUND OF THE INVENTION

Recently, supplementary features of a portable terminal have increased. For example, the portable terminal provides various supplementary features including a file playing function of listening to, or watching, an audio file or a video file such as a music file and an English study file which are stored in advance, and a camera function that can take a picture of a photograph or a moving picture. Among these functions of the portable terminal, the file playing function, in particular, an audio file playing function or a call function, is a function of playing various audio files that are stored in the portable terminal and outputting through a speaker prepared in the portable terminal or outputting a voice signal that is transmitted and received. When using such functions, in some cases, a user of portable terminal uses an earphone so that an audio signal outputted from the portable terminal may not heard outside or may be more clearly listened to. The above-described portable terminal prepares an earphone interface for the connection of earphone and supports a four-pole earphone interface for the support of voice phone call according to a mobile communications function. That is, a typical portable terminal prepares the four-pole earphone interface and supports the collection of the output of an audio signal of left side and right side and the collection of an audio signal of ear-microphone. However, the earphone that currently is sold on the market is predominately a three-pole earphone that can be applied to an MP3 player or a cassette tape player, that is, an earphone without ear-microphone. Accordingly, portable terminal users frequently listen to the audio signal output of the portable terminal by using not only the four-pole earphone but also three-pole earphone. At this time, the earphone interface of the current portable terminal does not have a way for distinguishing whether a connected earphone is three-pole earphone four-pole earphone. Accordingly, an earphone circuit for the support of three-pole earphone is required while an earphone circuit that is suitable for the support of the connection of four-pole earphone is required.

### SUMMARY OF THE INVENTION

To address the above-discussed deficiencies of the prior art, it is a primary object to provide a system and method for a portable terminal that includes an earphone circuit that is capable of controlling a portable terminal and an earphone after detecting the connection of a three-pole earphone and a four-pole earphone.

In accordance with an aspect of the present invention, a portable terminal includes an earphone circuit. The earphone circuit includes: an interface unit to which a three-pole earphone or a four-pole earphone is connected; a controller that activates a microphone function prepared in a terminal body in an event that the three-pole earphone is connected, and deactivates the microphone function of terminal body in an event that the four-pole earphone is connected; and an audio processing unit that is configured to output an audio signal to the three-pole earphone or the four-pole earphone under a control of the controller.

In accordance with another aspect of the present invention, a method of operating a portable terminal including an earphone circuit includes: determining whether a three-pole earphone or a four-pole earphone is connected to an interface unit; and activating a microphone function prepared in a portable terminal body in case the three-pole earphone is connected, deactivating the microphone function of the portable terminal body in case the four-pole earphone is connected.

The portable terminal having an earphone circuit and operation method using the same can control a portable terminal and an earphone after detecting the connection of a three-pole earphone and a four-pole earphone, such that various earphone usage can be implemented.

Before undertaking the DETAILED DESCRIPTION OF THE INVENTION below, it may be advantageous to set forth definitions of certain words and phrases used throughout this patent document: the terms "include" and "comprise," as well as derivatives thereof, mean inclusion without limitation; the term "or," is inclusive, meaning and/or; the phrases "associated with" and "associated therewith," as well as derivatives thereof, may mean to include, be included within, interconnect with, contain, be contained within, connect to or with, couple to or with, be communicable with, cooperate with, interleave, juxtapose, be proximate to, be bound to or with, have, have a property of, or the like; and the term "controller" means any device, system or part thereof that controls at least one operation, such a device may be implemented in hardware, firmware or software, or some combination of at least two of the same. It should be noted that the functionality associated with any particular controller may be centralized or distributed, whether locally or remotely. Definitions for certain words and phrases are provided throughout this patent document, those of ordinary skill in the art should understand that in many, if not most instances, such definitions apply to prior, as well as future uses of such defined words and phrases.

### BRIEF DESCRIPTION OF THE DRAWINGS

For a more complete understanding of the present disclosure and its advantages, reference is now made to the following description taken in conjunction with the accompanying drawings, in which like reference numerals represent like parts:

FIGURE 1 illustrates a schematic configuration of a portable terminal to which an earphone is connected according to an exemplary embodiment of the present invention;

FIGURE 2 illustrates a block diagram for a detail configuration of a portable terminal according to an exemplary embodiment of the present invention;

FIGURE 3 illustrates a detail configuration of an interface unit according to an exemplary embodiment of the present invention;

FIGURE 4 illustrates a state where a three-pole earphone is connected to an interface unit according to an exemplary embodiment of the present invention;

FIGURE 5 illustrates a state where a four-pole earphone is connected to an interface unit according to an exemplary embodiment of the present invention; and

FIGURE 6 illustrates a flowchart for an operating method of a portable terminal including an earphone circuit according to an exemplary embodiment of the present invention.

### DETAILED DESCRIPTION OF THE INVENTION

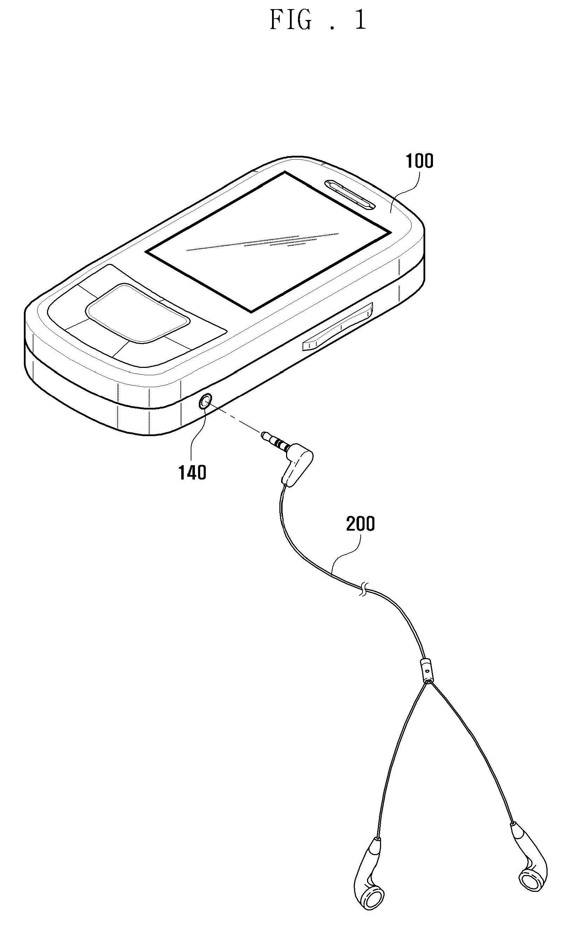

FIGURES 1 through 6, discussed below, and the various embodiments used to describe the principles of the present disclosure in this patent document are by way of illustration only and should not be construed in any way to limit the scope of the disclosure. Those skilled in the art will understand that the principles of the present disclosure may be implemented in any suitably arranged wireless communications device.

Hereinafter, for the sake of convenience in illustration, a portable terminal illustrated according to an exemplary embodiment of the present invention is a mobile communications terminal. However, the present invention is not limited to a mobile communications terminal. That is, the portable terminal, according to an exemplary embodiment of the present invention, is a terminal that has an earphone interface. Preferably, the present invention can apply to all types of communication and information devices, multimedia devices, and the applications thereof such as, a personal digital assistant (PDA), a smart phone, an international mobile telecommunication 2000 (IMT-2000), an universal mobile telecommunication service (UMTS) and a digital broadcasting terminal.

FIGURE 1 illustrates a schematic configuration of a portable terminal in which an earphone can be mounted according to an exemplary embodiment of the present invention.

Referring to FIGURE 1, the portable terminal according to an exemplary embodiment of the present invention includes a portable terminal body 100 and an earphone 200 attachable to the portable terminal body 100. It is preferable that the portable terminal of the present invention includes an interface unit by which the portable terminal body 100 and the earphone 200 can be connected since the earphone 200 is manufactured to be detachable to the portable terminal body 100. The portable terminal body 100 can be classified into various types, such as, for example, a slide type, a folder-type, and a flip-type. This portable terminal body 100 can include an interface unit 140 to which the earphone 200 can be attached and detached.

The interface unit 140 can be a form including a connection terminal including a certain number. Particularly, the interface unit 140 can include a terminal which can classify a three-pole earphone and a four-pole earphone. Moreover, in order to support various option functions of the portable terminal, for example, an earphone function, and an external speaker function, or the like, an external device relevant to each function can be connected. The earphone 200 can include a connection unit that is attachable to the interface unit 140 of the portable terminal, a pair of ear speakers, and an ear-microphone that collects an audio signal of a speaking person in the voice phone call. The earphone 200 outputs an audio signal through a pair of speakers according to the control of the portable terminal after having been connected to the portable terminal body 100. Moreover, the earphone 200 can include a means that can classify the kind of earphone. For example, a means that can classify when a three-pole earphone of a four-pole earphone is connected to the portable terminal. If the earphone 200 is connected to the portable terminal body 100, the portable terminal of the present invention having such a configuration alters the path of an audio signal connected to the interface unit 140 according to the kind of the connected earphone. That is, the portable terminal body 100 checks the kind of the earphone connected to the interface unit 140 through a comparator and the output of comparator is connected to a control terminal of switches that can alter the path of the audio signal such that the path of the audio signal can be altered through the switching operation of switches. As described above, the audio signal path is altered according to the kind of earphone such that the portable terminal that uses a four-pole earphone can also use a three-pole earphone without any malfunction. Hereinafter, each configuration of the portable terminal body 100 according to an exemplary embodiment of the present invention is illustrated in detail.

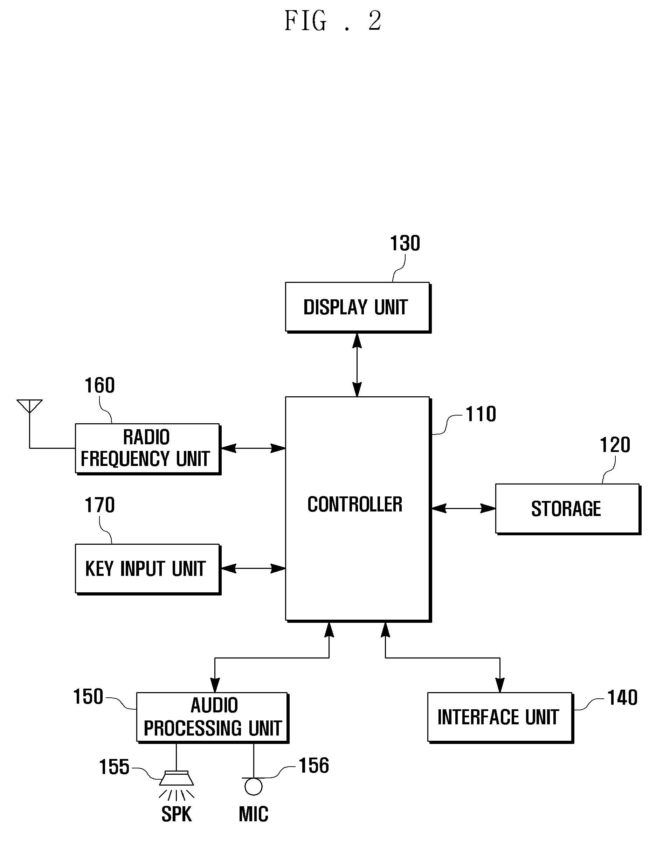

FIGURE 2 illustrates a block diagram of a detail configuration of a portable terminal 100 according to an exemplary embodiment of the present invention;

Referring to FIGURE 2, the portable terminal body 100 of the present invention includes a radio frequency unit 160, a key input unit 170, an audio processing unit 150, an interface unit 140, a display unit 130, a storage 120 and a controller 110. Hereinafter, each configuration is illustrated in detail. The radio frequency unit 160 is operable to send and receive a signal relating to a mobile telephone communication, a short message service (SMS), a multimedia message service (MMS), a voice communications and data communications. Moreover, the radio frequency unit 160 converts voice/sound data and control data into a radio signal to transmit, receive a radio signal and converts into voice/sound data and control data to output. To this end, the radio frequency unit 160 includes a radio frequency transmitter that up-converts and amplifies the frequency of a transmit signal, and a radio frequency receiver that low-noise amplifies a reception signal and down-converts the frequency. Particularly, the radio frequency unit 160 transmits an audio signal to another portable terminal when using the voice phone call service according to the control of the controller. The key input unit 170 includes a number, a character and/or a function key for inputting number and character information and setting up various functions. The key input unit 170 generates an input signal for activating a voice phone call function, an input signal for selecting a file stored in the storage, and an input signal for playing the selected file in response to the input of user, and can transmit to the controller 110. In the key input unit 170, the generation of the input signal generated from a specific key can be limited in case the earphone 200 is connected to the interface unit 140. The audio processing unit 150 plays an audio signal transmitted from the controller 110 through a Speaker (155) or transmits an audio signal, such as a voice inputted from a Microphone (MIC) 156 to the controller 110. That is, the audio processing unit 150 converts voice/sound data into an audible sound and outputs through the speaker 155in response to the control of the controller 110, and converts an audio signal such as a voice which is received from the microphone 156into digital data and outputs to the controller 110. The audio processing unit 150 can output an audio signal that informs the fact that the earphone 200 is connected to the interface unit 140 or is separated from the interface unit 140. The audio signal can be altered according to the menu setting or volume setting of the portable terminal.

Particularly, according to the kind of the earphone that is applied to the interface unit 140, the audio processing unit 150 of the invention can change the operation of the microphone156. That is, the microphone 156of the audio processing unit 150 can be activated under the control of the controller 110 if a three-pole earphone is connected to the interface unit 140 whereas the function of the microphone 156can be limited if a four-pole earphone is connected to the interface unit 140. The interface unit 140 provides a connection means that enables the earphone 200 to connect to the portable terminal body 100 and to transmit and receive an audio signal. In other words, the interface unit 140 provides an interface for the communications between the portable terminal body 100 and the earphone 200, and provides a path of transmitting a transmission signal transmitted from the ear-microphone of the earphone 200 to the controller 110. Moreover, the interface unit 140 can provide a path of transmitting a function sound or an imitation sound generated in the controller 110 to the earphone 200 or transmitting the receiving voice received from the radio frequency unit 160 to the earphone 200.

The display unit 130 displays image data outputted from the controller 110, user data requested from a user, and a supplementary feature screen. The display unit 130 can include a liquid crystal display (LCD). However, the display unit is not limited to a LCD. The display unit can utilize Organic Light Emitting Diodes (OLED) and the applied materials corresponding to OLED. Particularly, the display unit 130 of the present invention can display screen data according to the function operation of the earphone 200 and a function selection menu of earphone, on a screen.

If the earphone 200 is connected through the interface unit 140, the display unit 130 can display a notification message about the connection on the screen in response to the control of the controller 110. More particularly, when the earphone 200 is connected to the interface unit 140, the controller 110 recognizes the earphone 200; then, based on this, the display unit 130 can display the state where the earphone 200 is connected. That is, the display unit 130 can generate a pop up window informing the connection of the earphone 200 or can display an icon in one side of the screen. Moreover, if a button that is equipped in the earphone 200 is pressed for the phone the call, a corresponding input signal is transmitted to the controller 110 and the display unit 130 can display a phone call list stored in the storage 120 under the control of the controller 110. A display about the connection state of the earphone 200 and the service providing state are not displayed according to the intention of a portable terminal designer or will be possible with other type. The storage 120 can store an Operating System (OS) for the booting of the portable terminal, and application programs for functions of the portable terminal, for example, a file playing function, a camera function, and a watching TV function. Moreover, the storage 120 can store user data generated according to the use of portable terminal, and data received through a communications channel. To this end, the storage 120 can be classified into a program area and a data area. The program area stores application programs for supporting above-described functions, and, in case of activating above-described functions in response to the user request, each function can be provided by using a corresponding application programs under the control of the controller 110. Particularly, the program area can include an earphone sorting routine so as to classify the kind of the earphone connected to the interface unit 140. The data area performs the function of storing data various data that are generated in performing the application programs, data inputted by a user, and phone book data. Particularly, after the data area stores a reference value of a signal transmitted from the interface unit 140 so as to classify the kind of earphone, it can be accessed by the controller 110 when the earphone sorting routine is activated. The controller 110 performs the function of controlling the overall operation of the terminal and a signal flow between inner blocks. According to an embodiment of the present invention, the controller 110 controls a signal flow between each configuration such as the radio frequency unit 160, the key input unit 170, the storage 120, the interface unit 140, the audio processing unit 150, the display unit 130 and the earphone 200 or the like. Particularly, the controller 110 of the present invention can use a General Purpose Input/Output port (GPIO) to recognize the earphone 200 connected to the interface unit 140.

More particularly, the interface unit 140 does not transmit a separate signal to the controller 110 in the event a three-pole earphone is connected; and in the event a four-pole earphone is connected, a signal of four-pole earphone connection is transmitted to the controller 110. In the event that the three-pole earphone is connected, the controller 110 controls the audio processing unit 150 such that an audio signal can be supplied to the left side ear speaker and the right side ear speaker, while activating the microphone (156) prepared in the audio processing unit 150. Accordingly, after the three-pole earphone is connected to the interface unit 140, a user can perform a phone call by using the microphone prepared in the audio processing unit 150. In the meantime, in the event that the four-pole earphone is connected, the controller controls the audio processing unit 150 such that an audio signal be supplied to the left side ear speaker and the right side ear speaker, while deactivating the microphone (156) prepared in the audio processing unit 150. And the controller 110 controls the audio processing unit 150 to collect and transmit a signal received from the ear-microphone of the four-pole earphone. Accordingly, a user can perform the voice communications by using the four-pole earphone.

In the meantime, FIGURE 2 illustrates, for the sake of convenience, a block configuration required for the description of an operation according to an embodiment of the present invention is illustrated. However, the present invention is not limited to such configuration. That is, according to the type, it is obvious that the portable terminal of the present invention can also include a camera unit and/or a digital broadcasting unit. In the above, a schematic configuration of the portable terminal according to an embodiment of the present invention is illustrated. Hereinafter, a configuration of the controller 110, the audio processing unit 150 and the interface unit 140 of the present invention is illustrated in more detail.

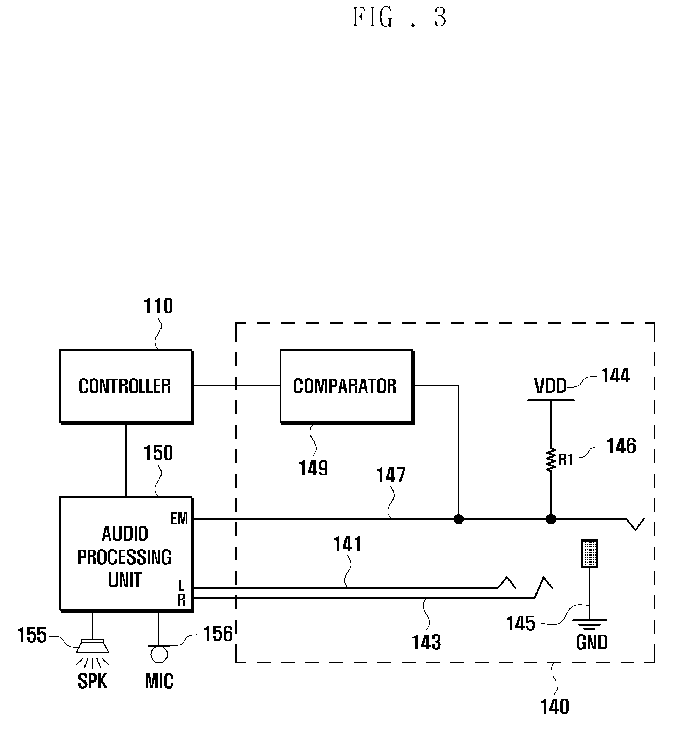

FIGURE 3 illustrates the controller 110, the audio processing unit 150 and the interface unit 140 are included in a portable terminal configuration according to an exemplary embodiment of the present invention. More particularly, FIGURE 3 also illustrates a detail configuration of the interface unit 140.

Referring to FIGURE 3, the interface unit 140 includes a first signal line 141, a second signal line 143, a ground line 145, an ear microphone signal line 147, a comparator 149 and a reference voltage unit (VDD) 144. The first signal line 141 is a path that transmits an audio signal transmitted to the left side ear speaker of the audio processing unit 150, while being connected to "L" port of the audio processing unit 150. And if the three-pole earphone or the four-pole earphone is connected, the first signal line 141 is contacted with the "L" pole which is a left side ear speaker terminal of each earphone. The second signal line 143 is a path that transmits an audio signal transmitted to the right side ear speaker of the audio processing unit 150, while being connected to "R" port of the audio processing unit 150. And if the three-pole earphone or the four-pole earphone is connected, the second signal line 143 is contacted with the "R" pole that is a right side ear speaker terminal of each earphone. The ground line 145 is contacted with a grounding prong formed in the three-pole earphone or the four-pole earphone connected to the interface unit 140, and connects the grounding prong of the three-pole earphone or the four-pole earphone to a ground (GND).

The ear microphone signal line 147 transmits an audio signal collected by the ear-microphone formed in the four-pole earphone to the audio processing unit 150. Accordingly, the ear microphone signal line 147 is connected to a microphone terminal (EM) of the audio processing unit 150. This ear microphone signal line 147 does not supply a separate signal in case the three-pole earphone is connected. That is, in case the three-pole earphone is connected to the interface unit 140, the ear microphone signal line 147 is connected to the grounding prong of the three-pole earphone and does not transmit a separate signal to the audio processing unit 150. The reference voltage unit 144 is connected to one side of the ear microphone signal line 147 and continuously provides a given reference voltage, for example, the voltage of approximately 2V for the ear microphone signal line 147. A first resistance (R1) 146 can be connected between the reference voltage unit (VDD) 144 and the ear microphone signal line 147. The comparator 149 is connected to between the controller 110 and the ear microphone signal line 147. This comparator 149 examines a voltage transformation of a reference voltage provided by the reference voltage unit (VDD) 144 connected to the ear microphone signal line 147.

More particularly, in case the three-pole earphone is connected, the grounding prong of three-pole earphone is connected to the ground line 145 and the ear microphone signal line 147. Since the voltage of the reference voltage unit (VDD) 144 flows through the grounding prong of three-pole earphone, the voltage of 0V is supplied to the comparator 149. In case the reference voltage is changed to 0V voltage, the comparator 149 generates a first information and transmits to the controller 110.

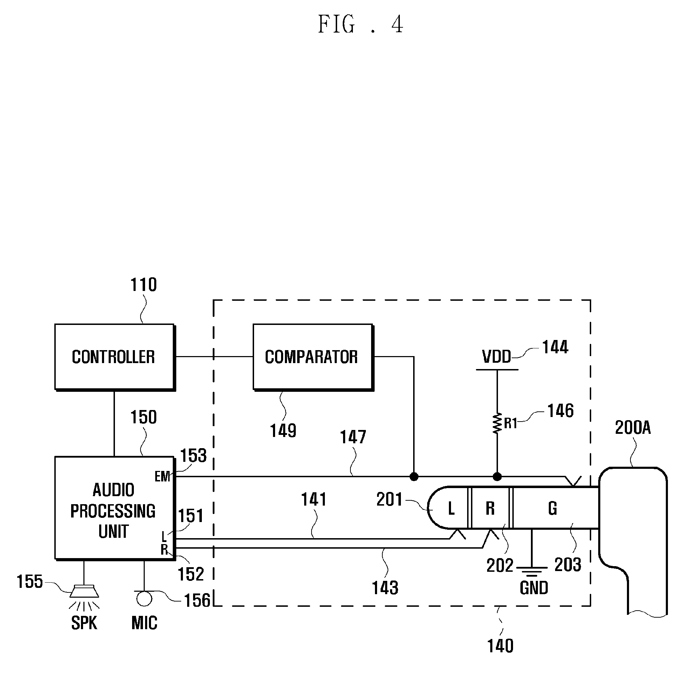

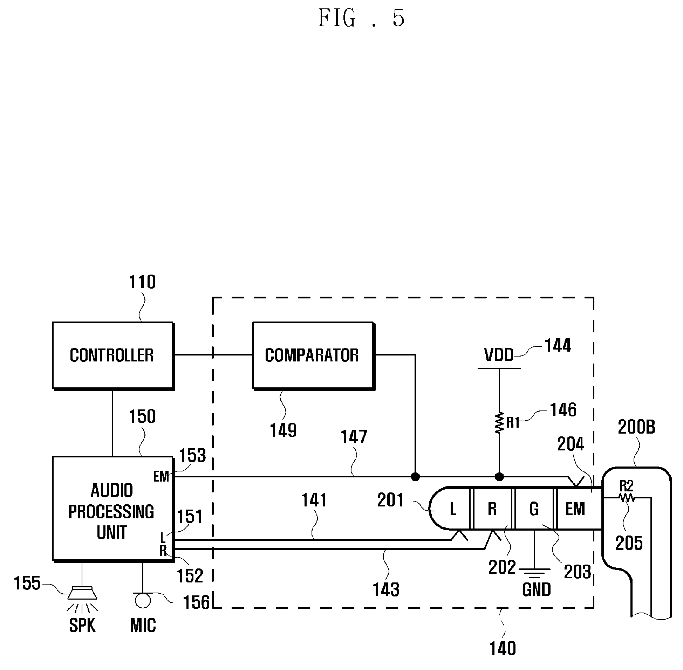

In the meantime, in case the four-pole earphone is connected to the interface unit 140, an ear microphone terminal of the four-pole earphone is contacted to the ear microphone signal line 147. Accordingly, a part voltage is transmitted to the four-pole earphone among the reference voltage. Consequently, the reference voltage transmitted to the comparator 149 is changed. According to the change of the reference voltage, the comparator 149 generates a second information and can transmit this to the controller 110. The controller 110 determines whether the three-pole earphone or the four-pole earphone is connected based on the first information and the second information. Based on this, an audio signal output of the audio processing unit 150 can be controlled. The detail operation of the interface unit 140 is illustrated with reference to FIGURE 4 and 5.

Each configuration of the interface unit 140 schematically illustrates a configuration for the support of compatibility of the three-pole earphone and the four-pole earphone of the present invention. Such interface unit 140 can include a resistance of a certain value, and can more prepare a diode for controlling the reverse current of a power. As illustrated in the above, in case the three-pole earphone is connected, the portable terminal according to an exemplary embodiment of the present invention deactivates the microphone terminal of the audio processing unit, activates the microphone terminal prepared in the audio processing unit under the control of the controller 110, such that the audio signal of user is collected by using the microphone prepared in the portable terminal body. In case the four-pole earphone is connected, the portable terminal normally supports the function of the four-pole earphone so as to perform the voice communications based on an audio signal transmitted from the ear-microphone prepared in the four-pole earphone. At this time, the interface unit 140 transmits to controller 110 a signal distinguished according to the state where the three-pole earphone or the four-pole earphone is connected so that a connected earphone can be distinguished.

FIGURE 4 illustrates a a function control of a portable terminal according to the connection of three-pole earphone according to an exemplary embodiment of the present invention.

In the state where the voice phone call function is activated from among the functions of the portable terminal, the portable terminal activates the microphone of the terminal body. However, the portable terminal can deactivate a speaker and microphone function of the terminal body 100 when the portable terminal performs a file playing function, for example, a MP3 playing function. Referring to FIGURE 4, the three-pole earphone 200A includes a left side ear speaker terminal L 201, a right side ear speaker terminal R 202, and a grounding prong G 203 connected to the interface unit 140. While being connected to the interface unit 140, the three-pole earphone 200A including such a configuration is contacted with each signal line of the interface unit 140. For example, the left side ear speaker terminal L 201 of the three-pole earphone 200A is connected with a first signal line 141 connected to "L" port 151 of the audio processing unit 150. Accordingly, the audio signal outputted to "L" port 151 of the audio processing unit 150 is transmitted to the left side ear speaker terminal L 201 through the first signal line 141. The right side ear speaker terminal R 202 of the three-pole earphone 200A is connected to a second signal line 143 connected to "R" port 152 of the audio processing unit 150. Accordingly, an audio signal outputted to "R" port 152 of the audio processing unit 150 is transmitted to the right side ear speaker terminal R 202 through the second signal line 143. The grounding prong G 203 of the three-pole earphone 200A is connected to an ear microphone signal line 147 connected to a ground line 145 of the interface unit 140 and an "EM" port 153 of the audio processing unit 150. Accordingly, the reference voltage provided from the reference voltage unit (VDD) 144 is grounded (GND) through the grounding prong G 203 of the three-pole earphone 200A, and a power is not supplied to the comparator 149.

In other words, the reference voltage unit (VDD) 144 transmits the reference voltage to the comparator 149 through a first resistance R1 146 and the ear microphone signal line 147, thereafter, transmitting the reference voltage to the first resistance R1 146 and the grounding prong G 203 as the three-pole earphone 200A is connected. After receiving the reference voltage from the reference voltage unit (VDD) 144, the comparator 149 receives 0V voltage as the three-pole earphone 200A is connected. When receiving 0V, the comparator 149 generates a first information, and can transmit the first information to the controller 110. When receiving the first information from the comparator 149, the controller 110 can recognize that the three-pole earphone 200A currently is connected. If the three-pole earphone 200A is connected, the controller 110 supplies a power to the microphone 156 of the audio processing unit 150 and activates the microphone 156. At this time, the controller 110 blocks the power supply of the speaker 155 to deactivate the speaker 155, and controls to output the audio signal to earphone through "L" port 151 and "R" port 152 of the audio processing unit 150. Thus, if the three-pole earphone 200A is connected, the portable terminal of the invention activates the microphone 156 and collects the audio signal according to the present function of the terminal, while an audio signal for outputting is outputted to the three-pole earphone 200A.

FIGURE 5 illustrates a function control of a portable terminal according to the connection of four-pole earphone 200B according to an exemplary embodiment of the present invention.

Hereinafter, the user voice phone call function of a portable terminal for the use of four-pole earphone 200B is illustrated. The portable terminal of the invention can deactivate the microphone function of collecting an audio signal of the four-pole earphone 200B in when using the file playing function of the portable terminal, particularly, the audio file playing function. That is, the controller 110 can block an "EM" port 153 of the audio processing unit 150 in the activation state of audio file playing function.

Referring to FIGURE 5, the four-pole earphone 200B includes a left side ear speaker terminal L 201, a right side ear speaker terminal R 202, a grounding prong G 203, and an ear microphone terminal EM 204 which are connected to the interface unit 140. The ear microphone terminal EM 203 is connected to a second resistance R2 205. The four-pole earphone 200B including such configuration is contacted with each signal line of the interface unit 140 while connected to the interface unit 140.

More particularly, the left side ear speaker terminal L 201 of the four-pole earphone 200B is connected to the first signal line 141 connecting to "L" port 151 of the audio processing unit 150. Accordingly, an audio signal outputted to "L" port 151 of the audio processing unit 150 is transmitted to the left side ear speaker terminal L 201 through the first signal line 141. The right side ear speaker terminal R 202 of the four-pole earphone 200B is connected to the second signal line 143 connecting to 'R" port 152 of the audio processing unit 150. Accordingly, an audio signal outputted to "R" port 152 of the audio processing unit 150 is transmitted to the right side ear speaker terminal R 202 through the second signal line 143. The grounding prong G 203 of the four-pole earphone 200B is connected to a ground (GND) through the ground line 145 of the interface unit 140. In the end, the microphone terminal "EM" 204 of the four-pole earphone 200B is connected to the ear microphone signal line 147 connecting to "EM" port 153 of the audio processing unit 150.

Accordingly, the reference voltage provided from the reference voltage unit (VDD) 144 is distributed by the first resistance R1 146 and the second resistance R2 205. The distributed voltage is transmitted to the comparator 149, and the comparator 149 senses the voltage change from the reference voltage to the distributed voltage and generates the second information and transmits the second information to the controller 110. Consequently, the controller 110 can check the connection of the four-pole earphone 200B based on a first path that connects the comparator 149, the ear microphone signal line 147, the first resistance R1 146, the ear microphone terminal EM 204, the second resistance R2 205, and the reference voltage unit (VDD) 144. The controller 110 controls the audio processing unit 150 to limit the function of the microphone 156 and speaker 155 of the audio processing unit 150 if the four-pole earphone 200B is connected. That is, the controller 110 blocks a power supplied to the microphone 156 and speaker 155 prepared in the audio processing unit 150 and can deactivate the microphone 156 and the speaker 155. In the above, a configuration of the earphone circuit for the support of portable terminal function according to the kind of earphone and a portable terminal having the circuit according to an embodiment of the present invention was illustrated. Hereinafter, the function operation of the portable terminal of the present invention having the above-described apparatus is illustrated in detail with reference to drawing.

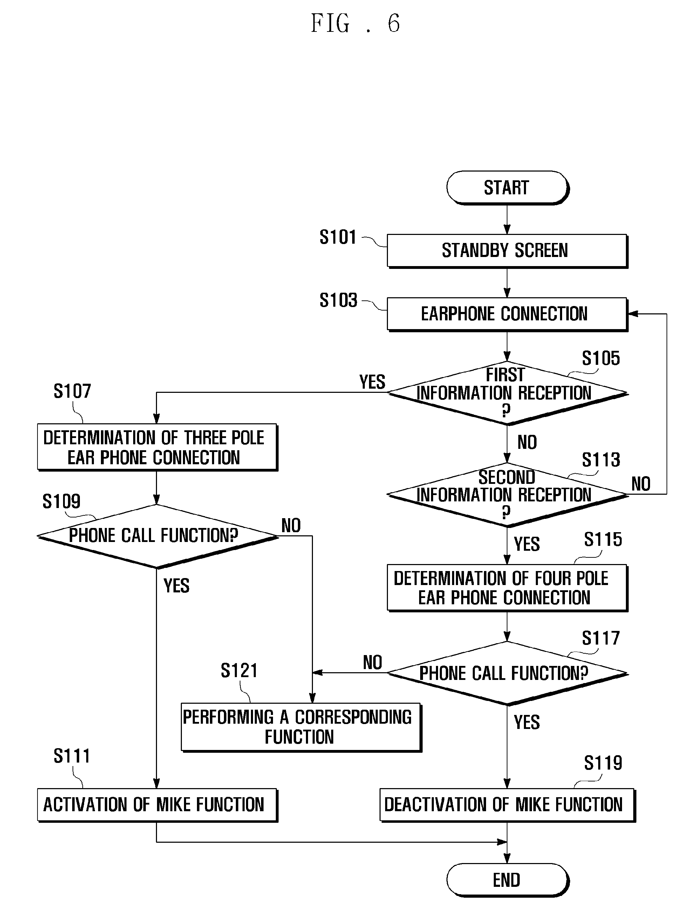

FIGURE 6 illustrates a flowchart for an operating method of a portable terminal according to an exemplary embodiment of the present invention.

Referring to FIGURE 6, if a power is supplied to the portable terminal, the portable terminal operates a booting program and completes booting, and outputs a preset stand-by screen to the display unit (step S101). An earphone is connected to the interface unit of the portable terminal (step S103). Accordingly, the controller determines whether a first information is received from the interface unit (step S105). In case the first information is received at step S105, the controller can determine that the three-pole earphone is connected (step S107). More particularly, the three-pole earphone includes a left side ear speaker terminal, a right side ear speaker terminal and a grounding prong, and the interface unit includes a first signal line that is connected to the left side ear speaker terminal, a second signal line that is connected to the right side ear speaker terminal, a ground line that is connected to the grounding prong and an ear microphone signal line. At this time, the reference voltage unit connected to the ear microphone signal line provides a reference voltage for the ear microphone signal line. Since the ear microphone signal line is connected to the grounding prong when the three-pole earphone is connected, the voltage applied to the ear microphone signal line becomes 0V. Accordingly, the comparator checking a voltage applied to the ear microphone signal line checks that the voltage is changed from the reference voltage to 0V, and accordingly, generates the first information to transmit the first information to the controller. Then, the controller checks whether the current portable terminal function is a phone call function (step S109). In case the current portable terminal function is a phone call function, the controller activates a microphone function prepared in the portable terminal body (step S111).

If the three-pole earphone is connected to the interface unit, a ground voltage is formed in the ear microphone signal line and a separate ear-microphone does not exist in the three-pole earphone, so that a voice signal of speaker or an audio signal cannot be collected. Accordingly, in case the call function of the portable terminal is activated, the controller activates the microphone equipped in the terminal body and collects the voice signal or the audio signal.

In the meantime, the controller checks whether the second information is received from the interface unit (step S113). If separate information is not received, the controller returns to step S103 and can repeatedly perform the next processes. In case the second information is received at step S113, the controller determines that the four-pole earphone is connected (step S115) and checks whether the current portable terminal function is a phone call function (step S117).

More particularly, in case the four-pole earphone is connected to the interface unit, a path that includes the comparator, the ear microphone signal line, the first resistance, the reference voltage unit, the ear microphone terminal and the second resistance is formed. Accordingly, the reference voltage generated in the reference voltage unit is distributed by the first resistance and the second resistance. In the event that the distribution voltage of the reference voltage is changed, the comparator generates the second information and can transmit the second information to the controller. Thereafter, the controller can recognize that the four-pole earphone currently is connected to the interface unit based on the second information received from the comparator. In the event that the portable terminal function is a phone call function at step S117, the controller deactivates the microphone function prepared in the terminal body (step S119). The four-pole earphone is an earphone having the left side ear speaker, the right side ear speaker, the ear-microphone and the grounding prong. Therefore, the phone call function is made possible by using only the four-pole earphone in the use of phone call function. Accordingly, it is preferable that the controller deactivates the microphone function of the terminal in the connection of four-pole earphone. In the meantime, in case the current portable terminal function is not a phone call function at step S109 and step S117, the controller supports to perform the function of the portable terminal, for example, the file playing function, the camera function, and the file search function (step S121). Particularly, in case of audio file playing, the controller deactivates the microphone and speaker function of the terminal when the three-pole earphone is connected, inactivates the microphone and speaker function of the terminal when the four-pole earphone is connected, and inactivates or blocks "EM" port of the audio processing unit.

Although the present disclosure has been described with an exemplary embodiment, various changes and modifications may be suggested to one skilled in the art. It is intended that the present disclosure encompass such changes and modifications as fall within the scope of the appended claims.

## Claims

1. A portable terminal comprising an earphone circuit, the earphone circuit comprising:
an interface unit adapted to couple to either a three-pole earphone or a four-pole earphone;
a controller configured to activate a microphone function prepared in a terminal body when the three-pole earphone is coupled to the interface unit, and configured to deactivate the microphone function of terminal body when the four-pole earphone is coupled to the interface unit; and
an audio processing unit configured to output an audio signal to the coupled earphone under a control of the controller.

2. The portable terminal of claim 1, wherein the interface unit comprises:
a first signal line adapted to couple with a left side ear speaker terminal of either the three-pole earphone or the four-pole earphone;
a second signal line adapted to couple with a right side ear speaker terminal of either the three-pole earphone or the four-pole earphone;
a ground line adapted to couple with a grounding prong of either the three-pole earphone or the four-pole earphone;
an ear microphone signal line adapted to couple with a ear microphone terminal of either the four-pole earphone and the grounding prong of the three-pole earphone;
a reference voltage unit configure to provided a reference voltage to the ear microphone signal line; and
a comparator configured to sense a voltage change of the ear microphone signal line.

3. The portable terminal of claim 2, wherein the comparator generates a first information corresponding to the voltage change from the reference voltage to a ground voltage and transmits the first information to the controller when the three-pole earphone is contacted with the interface unit.

4. The portable terminal of claim 2, further comprising a first resistance between the reference voltage unit and the ear microphone signal line, wherein the comparator generates a second information and transmits the second information to the controller when the reference voltage is changed to a voltage that is distributed by the first resistance and a second resistance connected to the ear microphone terminal of the four-pole earphone.

5. The portable terminal of claim 1, wherein, when a phone call function of the portable terminal is activated, the controller activates the microphone function of terminal body according to the coupling of the three-pole earphone.

6. The portable terminal of claim 1, wherein, when the three-pole earphone is coupled and when an audio file playing function is activated, the controller controls deactivates the microphone function of terminal body.

7. The portable terminal of claim 1, wherein, when a phone call function of the portable terminal is activated, the controller activates an ear microphone function based on the four-pole earphone according to the coupling of the four-pole earphone.

8. The portable terminal of claim 1, wherein, when the four-pole earphone is coupled and when an audio file playing function is activated, the controller controls deactivates an ear microphone function based on the four-pole earphone.

9. A method of operating a portable terminal comprising an earphone circuit, the method comprising:
determining whether a three-pole earphone or a four-pole earphone is connected to an interface unit; and
at least one of activating a microphone function prepared in a portable terminal body when the three-pole earphone is connected, and deactivating the microphone function of the portable terminal body when the four-pole earphone is connected.

10. The method of claim 9, wherein the interface unit includes an ear microphone signal line, a reference voltage unit provides a reference voltage to the ear microphone signal line, and a comparator is configured to detect a voltage change of the ear microphone signal line, and wherein the step of determining comprises determining that the three-pole earphone is connected when the reference voltage of the ear microphone signal line is changed to a ground voltage.

11. The method of claim 9, wherein the interface unit includes an ear microphone signal line, a reference voltage unit provides a reference voltage to the ear microphone signal line, and a comparator is configured to detect a voltage change of the ear microphone signal line, and wherein the step of determining comprises determining that the four-pole earphone is connected when the reference voltage of the ear microphone signal line is changed to a given voltage.

12. The method of claim 9, wherein the step of at least one of activating or deactivating comprises checking a function of the currently activated portable terminal, and performing a microphone activation function of the portable terminal body according to the connection of the three-pole earphone when the function of the currently activated portable terminal is a phone call function.

13. The method of claim 9, wherein the step of at least one of activating or deactivating comprises:
checking a function of the currently activated portable terminal; and
deactivating a microphone function of the portable terminal body, when the three-pole earphone is connected, and when the function of the currently activated portable terminal is an audio file playing function.

14. The method of claim 9, wherein the step of at least one of activating or deactivating comprises:
checking a function of the currently activated portable terminal; and
deactivating a four-pole earphone based ear microphone function when the four-pole earphone is connected, and when the function of the currently activated portable terminal is an audio file playing function.

15. The method of claim 9, wherein the step of at least one of activating or deactivating comprises:
checking a function of the currently activated portable terminal; and
activating a four-pole earphone based ear microphone function when the four-pole earphone is connected, and when the function of the currently activated portable terminal is a phone call function.
